# EUROPÄISCHE PATENTSCHRIFT

(11) **EP 0 426 001 B1**
(45) Veröffentlichungstag und Bekanntmachung des Hinweises auf die Patenterteilung: **26.01.1994**
(21) Anmeldenummer: 90120447.9
(22) Anmeldetag: 25.10.1990
(51) Int. Cl.: B64D 17/72, F42B 23/24, F42B 10/56

(54) **Verfahren und Einrichtung zum schnelleren automatischen Oeffnen eines Fallschirms**
Method and device for accelerating the automatic opening of a parachute
Procédé et dispositif pour accélérer l'ouverture automatique d'un parachute

(30) Priorität: 28.10.1989 DE 3936064
(43) Veröffentlichungstag der Anmeldung: 08.05.1991
(73) Patentinhaber: Dynamit Nobel Aktiengesellschaft, 53839 Troisdorf (DE)
(72) Erfinder: Schöffl, Rainer, W-5068 Odenthal (DE)

(56) Entgegenhaltungen:
- DE-A- 3 825 786
- FR-A- 2 137 715
- FR-A- 2 260 772
- US-A- 3 087 697
- WEHRTECHNIK. August 1988, BONN DE Seiten 74 - 79; GEORG STAMMEL: "SPERREN ERGANZEN FEUER UND BEWEGUNG"

## Beschreibung

Die Erfindung richtet sich auf ein Verfahren zum Verkürzen der Zeit des Entfaltens eines an einem Objekt befestigten Fallschirms in einer Luftströmung, auf eine Einrichtung zum Abbremsen des Falls und zum weichen Landen eines Objekts aus geringer Höhe, einen Fallschirm aufweisend, der sich bei hinreichender Sinkgeschwindigkeit des Objekts automatisch öffnet, sowie auf ein Minensystem zum Bekämpfen militärischer Objekte aus der Luft, bei dem ein Wirkkörper aus einer Lauerstellung im Gelände bei entsprechenden Signalen mit Hilfe eines Raketenantriebs in die Höhe transportiert wird, der Wirkkörper in einen durch einen Fallschirm gebremsten Sinkflug übergeht und dabei Einrichtungen zur autonomen Bekämpfung der militärischen Objekte aus der Luft wirksam werden.

Mit einem Fallschirm lassen sich Lasten mit verhältnismäßig geringer Sinkgeschwindigkeit (größenordnungsmäßig 5 m/s) zu Boden bringen. Ein Fallschirm entfaltet sich nach dem Herausziehen aus einem Verpackungssack automatisch durch Luftströmung. Zum Entfalten ist eine Mindestfluggeschwindigkeit des abzubremsenden Objekts erforderlich; sie liegt in der Größenordnung 15 m/s. In dem Fall, daß das Objekt, z. B. der Wirkkörper einer Antitankmine, nahezu senkrecht nach oben bis zu einer vorgegebenen Höhe transportiert wird, um anschließend daran wieder mittels eines Fallschirmes herabzusinken, muß dieses Objekt erst bis zum Gipfelpunkt aufsteigen, wo die vertikale Geschwindigkeit Null ist. Dann sinkt das Objekt im freien Fall herab, bis seine Fallgeschwindigkeit hoch genug ist, um den Fallschirm erfolgreich zu entfalten. Die Zeitspanne des freien Falls beträgt wenigstens 1,5 s, um die Fallgeschwindigkeit für das Entfalten des Fallschirmes zu erreichen. Aus taktischen Gründen ist es wünschenswert, diese Zeitspanne zu verkürzen und gegebenenfalls sogar ein Entfalten des Fallschirmes zu ermöglichen, bevor der Gipfelpunkt erreicht wird.

Aufgabe der Erfindung ist ein Verfahren und eine Einrichtung zum Verkürzen der Zeit, die ein Fallschirm zu seiner Entfaltung benötigt. Dieses Verfahren und diese Einrichtung sollen insbesondere bei einem Minensystem einsetzbar sein, bei dem möglichst schnell nach Erreichen einer Gipfelhöhe ein durch einen Fallschirm verzögertes Absinken erfolgt.

Die Erfindung wird in den unabhängigen Ansprüchen 1, 3 und 7 beschrieben.

Verfahrensmäßig wird die Aufgabe dadurch gelöst, daß das Objekt in Flugrichtung (meist identisch mit der Fallrichtung) zum selbsttätigen Öffnen des Fallschirms zusätzlich beschleunigt wird. Die Einrichtung ist dadurch gekennzeichnet, daß das Objekt mit einem schaltbaren Antrieb zur Beschleunigung des Objekts verbunden ist. Der Schaltvorgang für das Inbetriebsetzen des Antriebs für die insbesondere abwärts gerichtete Beschleunigung des Objektes erfolgt z. B. mittels eines entsprechenden Sensors in Abhängigkeit von der erreichten Aufstiegshöhe, der Aufstiegszeit oder auch der Geschwindigkeit des aufwärts gestiegenen Objektes im oder nahe dam Gipfelpunkt. Bei dem Minensystem wird die Schubrichtung des Raketenantriebs kurz vor Erreichen einer Sollhöhe umgekehrt und der Wirkkörper bis zum Erreichen einer Mindestsinkgeschwindigkeit zusätzlich beschleunigt. Anstelle eines Raketenmotors für den schaltbaren Antrieb zur insbesondere abwärts gerichteten Beschleunigung des Objektes kann aber auch eine von dem Objekt abtrennbare Gegenmasse, z. B. das abgebrannte Triebwerk eines Raketenmotors, vorgesehen werden, welche entgegengesetzt zur abwärts gerichteten Flugrichtung des Objektes mit Hilfe einer Pulverladung abgestoßen bzw. abgeschossen wird, so daß dem fallenden Objekt eine zusätzliche Abwärtsbeschleunigung erteilt wird.

Gemäß dem Verfahren bzw. mit der Einrichtung wird ein Zeitgewinn beim Öffnen des Fallschirms erzielt. Speziell bei dem Minensystem reicht der Zeitgewinn in den Bereich von Sekunden: die Mine muß nicht so hoch wie bisher transportiert werden und kann schneller nach Erreichen der Gipfelhöhe mit der Bekämpfung militärischer Objekte beginnen.

Die Erfindung ist in der Zeichnung beispielhaft dargestellt und im folgenden weiter beschrieben. Es zeigen:
- Figur 1: Wirkkörper mit Raketenmotor nach dem Start;
- Figur 2: Wirkkörper mit umgeschalteten Raketenmotor nach Erreichen der Gipfelhöhe;
- Figur 3: Arbeitsphase der Mine;
- Figur 4: Schnitt durch einen Raketenmotor.

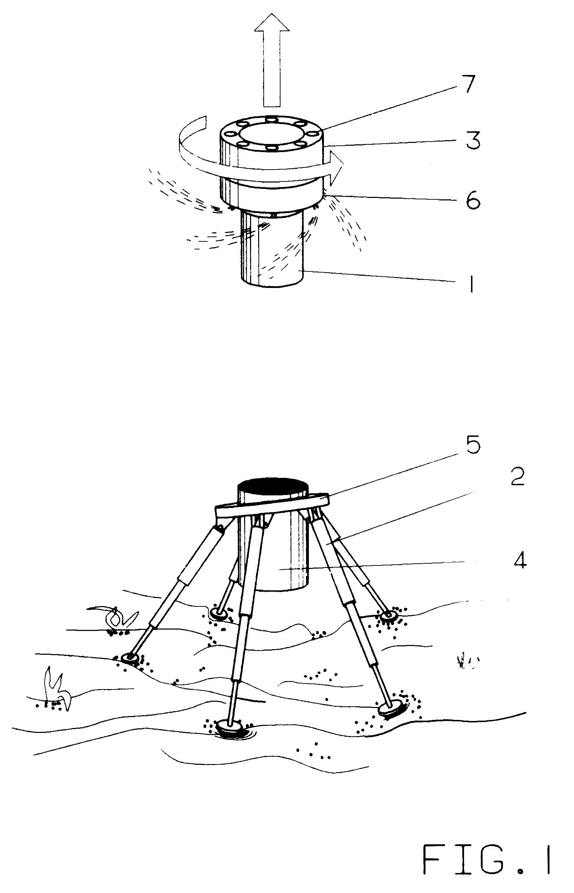

Figur 1 zeigt einen aufsteigenden Wirkkörper 1 eines modernen Minensystems (Wehrtechnik 8/1988, Seite 74 - 79). Die Wirkkörper sind in Gestellen in Lauerstellung auf dem Boden verteilt. Sie enthalten Sensoren (beispielsweise Richtmikrofone) und eine Auswertelogik. Sobald innerhalb eines voreingestellten Raumbereiches durch die Auswertelogik ein spezielle Signale aussendendes Objekt geortet worden ist, wird der Wirkkörper 1 durch einen mit ihm verbundenen Raketenmotor 3 nach oben befördert. Eine Besonderheit an dem Gestell 2 ist die Verbindung der Beine des Gestells über ein kardanisches Gelenk in einem Ring 5 mit einer Hülse 4, in der der Wirkkörper 1 steckt. Bei entsprechend tiefliegendem Schwerpunkt ist somit immer sichergestellt, daß der Wirkkörper 1 mit dem Raketenmotor 3 im Gelände stets senkrecht ausgerichtet ist und für das Hochsteigen keine weiteren Steuermanöver erforderlich sind. Zur Stabilisierung rotiert der Wirkkörper 1 um seine Längsachse, was durch entsprechend schräggestellte Düsen 6 im Raketenmotor 3 erreicht wird.

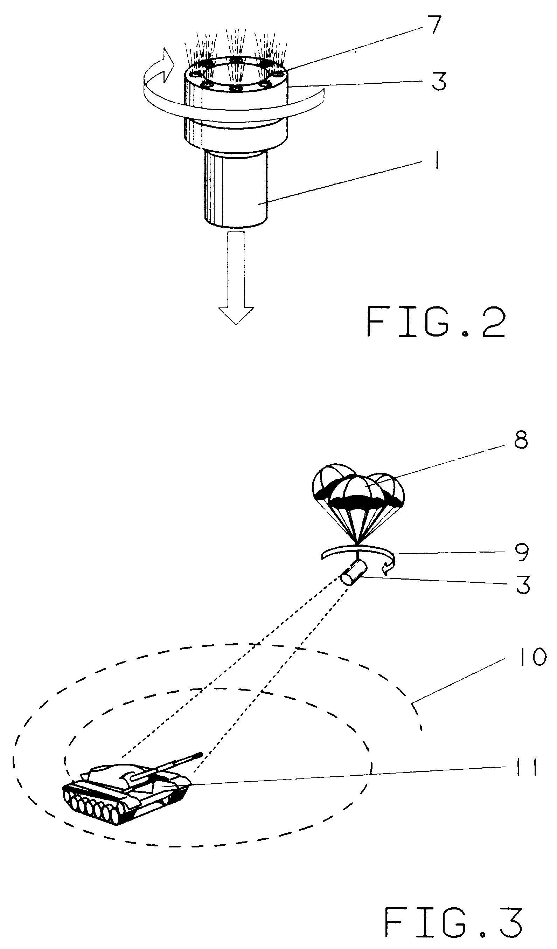

Größenordnungsmäßig wird der Wirkkörper 1 durch den Raketenmotor 3 in eine Höhe von 100 bis 300 m hochgezogen (der Raketenmotor könnte den Wirkkörper auch schieben, wenn er hinter dem Wirkkörper angebracht wäre). Bei Erreichen der vorgesehenen Gipfelhöhe oder auch schon kurze Zeit davor wird der Schub des Raketenmotors 3 umgekehrt. Die Gase treten jetzt durch Düsen 7 nach oben aus (Figur 2). Auch diese Düsen 7 sind etwas schräg gestellt. Durch sie soll der Drall des Wirkkörpers, der beim Aufsteigen zur Stabilisierung erwünscht war, näherungsweise aufgehoben werden, um die Funktion des Fallschirms nicht zu beeinträchtigen.

Der Fallschirm ist im oberen, an den Raketenmotor 3 anstoßenden Bereich des Wirkkörpers untergebracht. In diesem Beispiel erfolgt die Entfaltung des Fallschirms erst, wenn der Raketenmotor 3 nach Ablauf der Schubumkehrphase automatisch vom Wirkkörper abgetrennt wird. Die Zeit während der der Schub des Raketenmotors 3 umgekehrt ist, liegt gewöhnlich unter 1 s. Mit dem umgekehrten Schub kann der Wirkkörper innerhalb dieser Zeit von z.B. 0,2 s auf eine Endgeschwindigkeit von 15 m/s nach unten beschleunigt werden (was einen Fallweg von nur 1,5 m bedeutet).

Durch diese relativ kurze Zeit, in der der Raketenmotor den Wirkkörper zur Erde hin beschleunigt, wird ein zu starkes Taumeln oder gar Überschlagen des Wirkkörpers verhindert.

In Figur 3 hängt der Wirkkörper 1 an einem Fallschirm 8, an dem er unter mäßiger Rotation 9 herabsinkt. Mit seinen Sensoren überstreicht er auf dem Boden eine spiralförmige Bahn 10, und sobald ein entsprechendes militärisches Objekt, z.B. ein Panzer 11, detektiert ist, wird es beispielsweise durch Abfeuern eines Hohlhladungsgeschosses bekämpft.

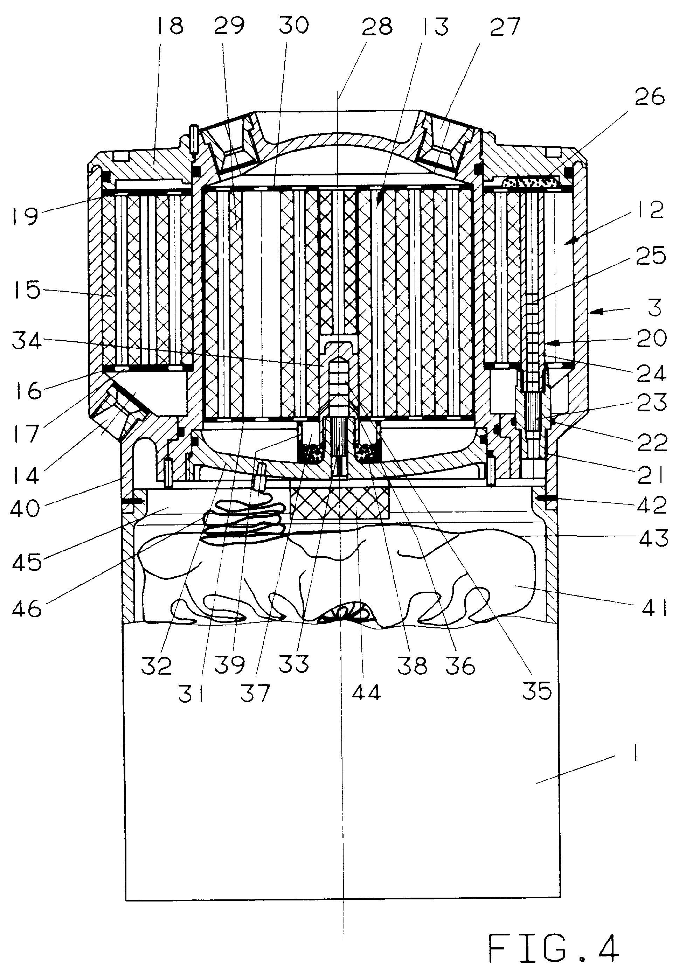

Ein zur Durchführung des Verfahrens zum Verkürzen der Zeit des Entfaltens eines Fallschirms in der Luftströmung geeignetes Raketentriebwerk ist in Figur 4 dargestellt. Es ist speziell für Minen entwickelt worden, die militärische Objekte gemäß Figur 3 von oben her bekämpfen sollen. Die Schubumkehr des Raketenmotors 3 wird hier durch zwei konzentrisch ineinander gesetzte Triebwerke 12, 13 bewirkt, die nacheinander gezündet werden. Dabei ist vorgesehen, daß das Triebwerk 12 eine vorgegebene Zeitspanne brennt und das Triebwerk 13 nach einer entsprechend vorgegebenen festeingestellten Zeitverzögerung gezündet wird. Das ringförmig ausgebildete Triebwerk 12 besitzt mehrere, schräg nach unten/außen und gleichzeitig schräg tangential gestellte Düsen 14. Im Triebwerk 12 befinden sich Röhren aus Festtreibstoff 15, die sich auf einem Ring 16 mit Öffnungen 17 abstützen und die gegen den Boden 18 durch eine gelochte Kunststoffscheibe 19 abgedeckt sind. Der Festtreibstoff 15 wird durch zwei Anzünder 20 angezündet (der Schnitt gemäß Figur 4 ist nur durch einen Anzünder 20 gelegt). Ein Anzünder 20 besteht aus einer Schraube 21 mit Dichtring 22 und Zündkapsel 23 sowie aus einem Rohr 24 mit darin befindlichen zylindrischen Körpern 25 aus einer Anzündmischung. Die darüber angeordneten Ladungen 26, die aus einem mit pulverförmiger Anzündmischung gefüllten Plastikgehäuse bestehen, dienen zur Verstärkung der Flamme, die durch Verbrennung der Körper 25 entsteht.

Bei dem inneren zylindrischen Triebwerk 13 weisen die Düsen 27 nach oben. Sie sind ebenfalls nach außen und tangential schräg gestellt, und zwar so, daß nach dem Abschalten des Triebwerks 13 möglichst keine Eigenrotation des Triebwerks um die Achse 28 mehr erfolgt. Das Triebwerk 13 weist ebenfalls Röhren mit Festtreibstoff 29 auf, die sich auf Lochscheiben 30, 31 abstützen. Zentral in dem Boden 32 ist eine Anzündkapsel 33 angeordnet. In dem darüber geschraubten Gehäuse 34 sind gepreßte Körper 35 aus einer Anzündmischung untergebracht. Die Flamme, die beim Abbrand der Körper 35 entsteht, wird durch Bohrungen 36 in ein topfförmiges Gehäuse 37 geleitet, in dem eine pulvrige Anzündmischung 38 ist. Wird diese entzündet, entweichen die Verbrennungsgase durch radiale Öffnungen 39 und entzünden den Festtreibstoff 29.

Die Gehäuse sind untereinander durch O-Ringe abgedichtet und die ineinander geschraubten Teile durch Stifte gegen selbständiges Lösen gesichert. Die Nutzlast, hier der Wirkkörper 1, ist an einem Absatz 40 durch Stifte befestigt. Ein Fallschirm 41 befindet sich im oberen Bereich des Wirkkörpers 1, der mittels Scherstiften 42 am Raketenmotor 12 befestigt ist. Zwischen dem durch eine flamm-beständige Folie 43 geschützten Fallschirm 41 und dem Boden 32 befindet sich eine druckerzeugende pyrotechnische Ladung 44, die elektrisch vom Wirkkörper 1 gezündet werden kann. Wenn dies geschieht, führt der im freien Raum 45 entstehende Druck dazu, daß die Scherstifte 42 durchgetrennt werden und der Raketenmotor 3 nach oben weggeschleudert wird. Eine Verbindungsschnur 46 zwischen Boden 32 und Fallschirm 41 bewirkt, daß dieser schnell herausgezogen wird und einen gebremsten Fall des Wirkkörpers herbeiführt.

Der bei der Zündung der Ladung 44 erzeugte Impuls auf den Wirkkörper 1 ist relativ klein. Er unterstützt aber auch noch die zuvor schon vom Raketenmotor 3 eingeleitete Beschleunigung des Wirkkörpers 1 nach unten.

Die schnelle Entfaltung des Fallschirmes 41 wird im wesentlichen durch die erhöhte Fallgeschwindigkeit bewirkt, die Verbindungsschnur 46 unterstützt allenfalls die Entfaltung.

## Patentansprüche

1. Verfahren zum Verkürzen der Zeit des Entfaltens eines an einem Objekt befestigten Fallschirms in einer Luftströmung, bei dem das Objekt mittels eines ersten Antriebes in die Höhe transportiert wird und der Fallschirm nach Beendigung dieser Transportphase die Bewegung des Objektes nach unten abbremst, **dadurch gekennzeichnet,** daß bei Beendigung der Beschleunigung während der Transportphase oder kurz danach das Objekt mittels eines zweiten Antriebes zum schnelleren Enfalten des Fallschirms kurzzeitig nach unten beschleunigt wird.

2. Verfahren nach Anspruch 1, **dadurch gekennzeichnet,** daß zusätzlich zur Beschleunigung des Objektes ein Drall auf das Objekt übertragen wird.

3. Einrichtung zum Abbremsen des Falls und zum weichen Landen eines Objektes (1) aus geringer Höhe, einen Fallschirm (41) aufweisend, der sich bei hinreichender Fluggeschwindigkeit des Objektes (1) automatisch öffnet, nach Anspruch 1 oder 2, **dadurch gekennzeichnet,** daß das Objekt (1) mit einem schaltbaren Antrieb (13) zum Beschleunigen nach unten verbunden ist.

4. Einrichtung nach Anspruch 3, **dadurch gekennzeichnet,** daß der Antrieb ein Raketenmotor (13) ist.

5. Einrichtung nach Anspruch 4, **gekennzeichnet durch** zwei ineinander gesteckte Triebwerke (12, 13), wobei ein Triebwerk (13) in einem näherungsweise zylindrischen Gehäuse, das andere (12) in einem dieses ringförmig umschließenden Gehäuse untergebracht ist, und die Schubrichtungen der beiden Triebwerke (12, 13) einander entgegengerichtet sind.

6. Einrichtung nach Anspruch 3, **dadurch gekennzeichnet,** daß der Antrieb des Objekts (1) abtrennbare Massen aufweist, die durch Ladungen entgegen der nach unten weisenden Flugrichtung nach oben beschleunigbar sind.

7. Minensystem zum Bekämpfen militärischer Objekte aus der Luft, bei dem ein Wirkkörper aus einer Lauerstellung im Gelände bei entsprechenden Signalen mit Hilfe eines Raketenantriebs in die Höhe transportiert wird, der Wirkkörper in einen durch einen Fallschirm gebremsten Sinkflug übergeht und dabei Einrichtungen zur autonomen Bekämpfung der militärischen Objekte aus der Luft wirksam werden, **dadurch gekennzeichnet**, daß die Schubrichtung des Raketenantriebs (3) kurz vor Erreichen einer Sollhöhe umkehrbar und der Wirkkörper (1) bis zum Erreichen einer Mindestsinkgeschwindigkeit zusätzlich nach unten beschleunigbar ist.

## Claims

1. Method for shortening the time of the unfolding of a parachute secured to an object in a flow of air, by which the object is transported upwards by means of a first drive and the parachute, at the end of this transporting phase, brakes the movement of the object downwards, characterised in that at the end of the acceleration during the transporting phase or shortly thereafter the object is accelerated downwards for a short time by means of a second drive for more rapid unfolding of the parachute.

2. Method according to claim 1, characterised in that in addition to the acceleration of the object, a spin is transmitted to the object.

3. Device for braking the fall and for soft landing of an object (1) from a low height, having a parachute (41) which opens automatically given sufficient flight speed of the object (1), according to claim 1 or 2, characterised in that the object (1) is connected to a switchable drive (13) for the purpose of acceleration downwards.

4. Device according to claim 3, characterised in that the drive is a rocket motor (13).

5. Device according to claim 4, characterised by two propulsion units (12, 13) which are fitted into each other, with one propulsion unit (13) being accommodated in a substantially cylindrical housing, the other propulsion unit (12) being accommodated in a housing which encloses the latter in an annular manner, and with the directions of thrust of the two propulsion units (12, 13) being in opposition to each other.

6. Device according to claim 3, characterised in that the drive of the object (1) has separable masses which can be accelerated upwards by means of charges in opposition to the direction of flight directed downwards.

7. Mine system for combating military objects from the air, in which an active body is transported upwards with the aid of a rocket drive from a position of wait on the ground, given corresponding signals, the active body goes into a descent braked by a parachute: and, moreover, devices for autonomous combating of the military objects from the air become effective, characterised in that the direction of thrust of the rocket drive (3) can be reversed shortly before a desired height is reached and the active body (1) can, in addition, be accelerated downwards until a minimum speed of vertical descent is reached.

## Revendications

1. Procédé pour réduire le temps d'ouverture dans un écoule- ment d'air d'un parachute fixé à un objet, dans lequel l'objet est transporté à une certaine hauteur par un premier moyen de propulsion et le parachute, à la fin de ladite phase de transport, ralentit le déplacement vers le bas de l'objet, caractérisé par le fait qu'à la fin de l'accélération pendant la phase de transport ou peu de temps après celle-ci, on accélère vers le bas, pendant un bref instant, l'objet à l'aide d'un second moyen de propulsion à des fins d'accélérer l'ouverture du parachute.

2. Procédé selon la revendication 1, caractérisé par le fait qu'en plus de l'accélération de l'objet, on imprime un mouvement de rotation audit objet.

3. Dispositif pour freiner la chute et permettre l'atterrissage en douceur d'un objet (1) tombant d'une faible hauteur, comportant un parachute (41) qui s'ouvre de manière automatique lorsque l'objet (1) a une vitesse de vol suffisante, conformément à la revendication 1 ou 2, caractérisé par le fait que l'objet (1) est lié à un moyen de propulsion (13) commandable afin de l'accélérer vers le bas.

4. Dispositif selon la revendication 3, caractérisé par le fait le moyen de propulsion est un moteur fusée (13).

5. Dispositif selon la revendication 4, caractérisé par deux propulseurs (12, 13) montés l'un dans l'autre, un propulseur (13) étant logé dans un carter sensiblement cylindrique et l'autre propulseur (12) étant logé dans un carter annulaire qui entoure le premier et les direction de poussée des deux propulseurs (12, 13) étant mutuellement opposées.

6. Dispositif selon la revendication 3, caractérisé par le fait que le moyen de propulsion de l'objet (1) présente des masses séparables qui, par des charges, peuvent être accélérées vers le haut, dans la direction opposée à la direction de vol dirigée vers le bas.

7. Système de mines pour combattre des objectifs militaires dans lequel, en présence de signaux correspondants, un élément actif peut être transporté dans l'air au moyen d'un moteur-fusée à partir d'une position d'affût sur le terrain, l'élément actif arrive dans une phase de descente freinée par un parachute et, au cours de celle-ci, des dispositifs pour combattre de manière autonome des objectifs militaires à partir de la position élevée sont activés, caractérisée par le fait que la direction de poussée du moteur-fusée (3) peut être inversée juste avant d'atteindre une hauteur de consigne et qu'une accélération supplémentaire vers le bas peut être appliquée à l'élément actif (1) jusqu'à ce qu'une vitesse de descente minimale soit atteinte.
